# EUROPEAN PATENT SPECIFICATION

(11) **EP 2 857 279 B1**
(45) Date of publication and mention of the grant of the patent: **01.01.2020**
(21) Application number: 13797252.7
(22) Date of filing: 23.05.2013
(51) Int. Cl.: B62B 9/10, B62B 7/08

(54) **STROLLER AND SEAT UNIT**
KINDERWAGEN UND SITZEINHEIT
VOITURE D'ENFANT, ET UNITÉ DE SIÈGE

(30) Priority: 29.05.2012 JP 2012122299
(43) Date of publication of application: 08.04.2015
(73) Proprietor: Combi Corporation, Tokyo 111-0041 (JP)
(72) Inventor: ASANO Junichi, Saitama-shi Saitama 336-0017 (JP); ARIMOTO Shinsaku, Saitama-shi Saitama 336-0017 (JP)
(74) Representative: Liesegang, Eva
(86) International application number: PCT/JP2013/064405
(87) International publication number: WO 2013/180014

(56) References cited:
- EP-A1- 1 445 166
- EP-A1- 2 390 161
- EP-A2- 0 719 694
- JP-A- S62 283 062
- JP-A- 2001 328 542
- JP-A- 2007 015 594
- JP-A- 2007 098 993
- JP-A- 2007 098 996
- JP-A- 2007 098 998
- JP-A- 2007 098 999
- JP-A- 2007 099 000
- JP-A- 2011 246 110
- US-A1- 2007 132 207

## Description

### TECHNICAL FIELD

The present invention relates to a stroller and a seat unit.

### BACKGROUND ART

Strollers for carrying babies are widely used. A stroller disclosed in JP2007-99000A (CN1939787A, US2007/132207) includes a seat part support frame supporting a seat body having a cushion property, a back part support frame, a side plate and a headrest. In this stroller, the back part support frame is swingable with respect to the seat part support frame in order that a back part is reclined. In addition, the side plate is swingable with respect to the seat part support frame and the headrest. The side plate functions as a link, so as to swing the headrest with respect to the back part support frame in conjunction with the swinging movement of the back part support frame.

Similarly to the stroller disclosed in JP2007-99000A, for example, almost all of the available strollers are configured to be foldable. In the foldable stroller, respective constituent elements are joined to one another so as to be rotatable. Some elements also function as links. The foldable stroller is assembled by fixing or pivotably joining the respective constituent elements. In the stroller disclosed in JP2007-99000A, the seat part support frame also functions as a link to enable folding of the stroller. The back part support frame is pivotably joined to the seat part support frame at the same positions at which a rear leg, a bracket, a connection pipe and a handle are pivotably joined to the seat part support frame. Thus, a number of these constituent elements can be pivotably joined only by one pivotably joining step.

The stroller according to the preamble of claim 1 is known from EP 0 719 694 A2.

### DISCLOSURE OF THE INVENTION

On the other hand, the inventors of the present invention have found that, if a constituent part of a stroller for supporting a seat, i.e., a seat unit, which includes a seat part frame element and a back part frame element, can be designed, structured or assembled separately from other constituent parts of the stroller, a degree of freedom in design can be improved. The present invention is based on this finding, and the object of the present invention is to provide a stroller capable of improving a degree of freedom in design.

The present invention provides a stroller according to claim 1. Embodiments of the invention are defined in the dependent claims.

According to the present invention, a degree of freedom in design of a stroller can be improved.

### BRIEF DESCRIPTION OF THE DRAWINGS

Fig. 1 is a perspective view for explaining an embodiment of the present invention, showing a stroller from which a seat body is removed, in a state where a back part frame element is standing.
Fig. 2 is a side view showing the stroller of Fig. 1 in a state where a back part is reclined.
Fig. 3 is a side view showing the stroller of Fig. 1 in a folded state.
Fig. 4 is a partial perspective view showing the stroller of Fig. 1.
Fig. 5 is a partial side sectional view showing the stroller of Fig. 1.
Fig. 6 is a perspective view for explaining another embodiment of the present invention, showing a stroller from which a seat body and a fabric member are removed, in a state where a back part frame element is reclined.
Fig. 7 is a side view showing the stroller of Fig. 6 in a state where a back part is reclined.
Fig. 8 is a side view showing the stroller of Fig. 1 in a folded state.
Fig. 9 is a partial perspective view showing the stroller of Fig. 1.
Fig. 10 is a partial side sectional view showing the stroller of Fig. 1.

### EMBODIMENTS FOR CARRYING OUT THE INVENTION

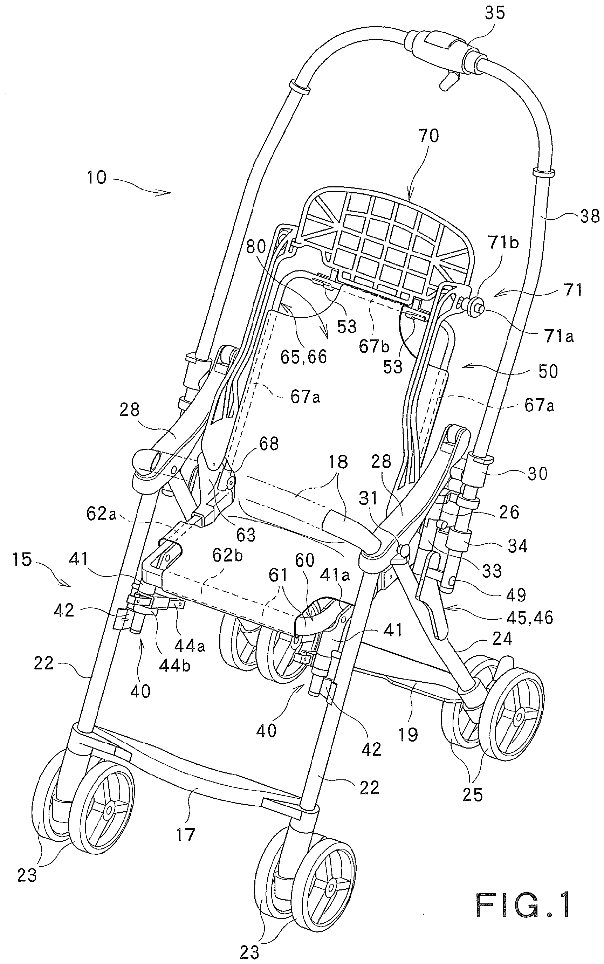

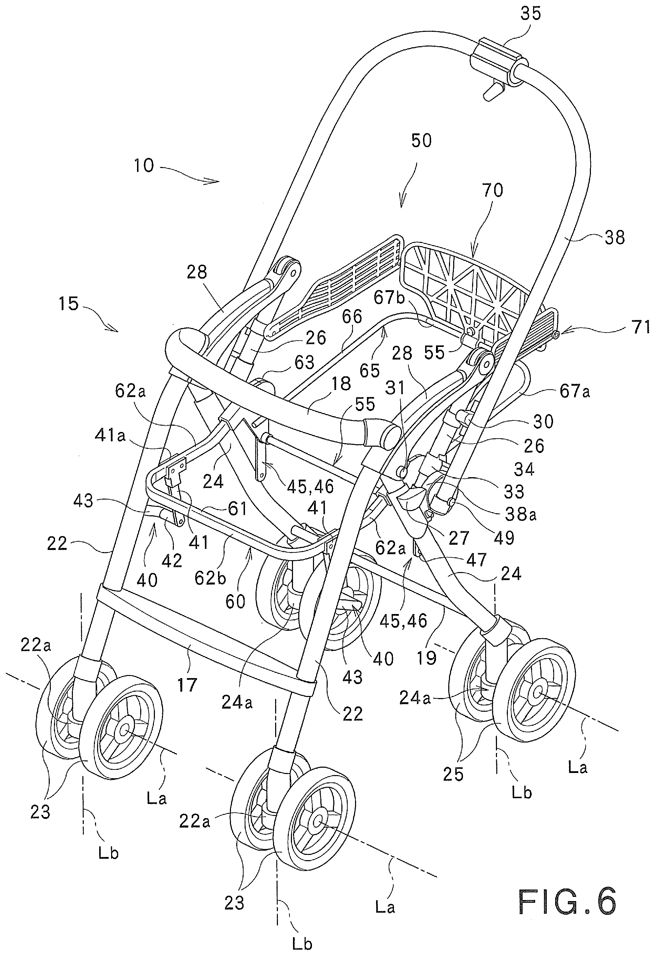

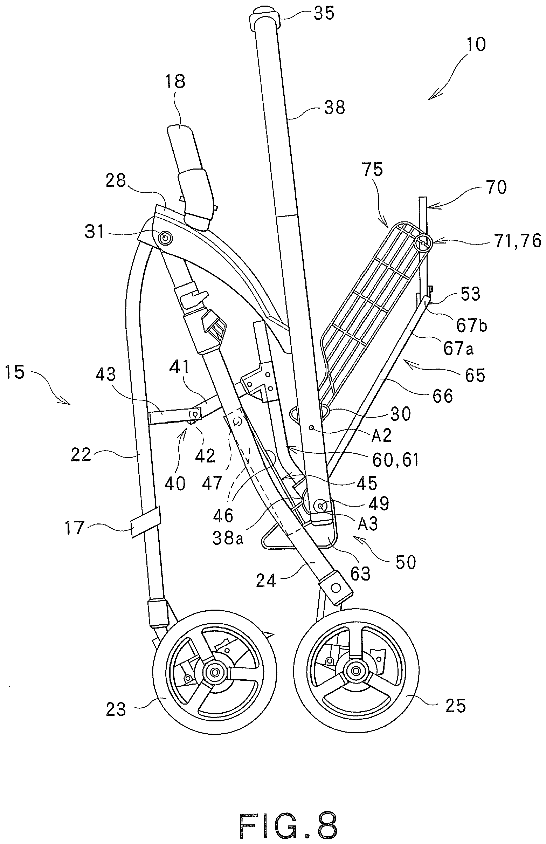

Embodiments of the present invention will be described herebelow with reference to the drawings. Figs. 1 to 5 are views for explaining a first embodiment of a stroller according to the present invention, and Figs. 6 to 10 are views for explaining a second embodiment of the stroller according to the present invention. Firstly, the stroller according to the first embodiment is described with reference to Figs. 1 to 5.

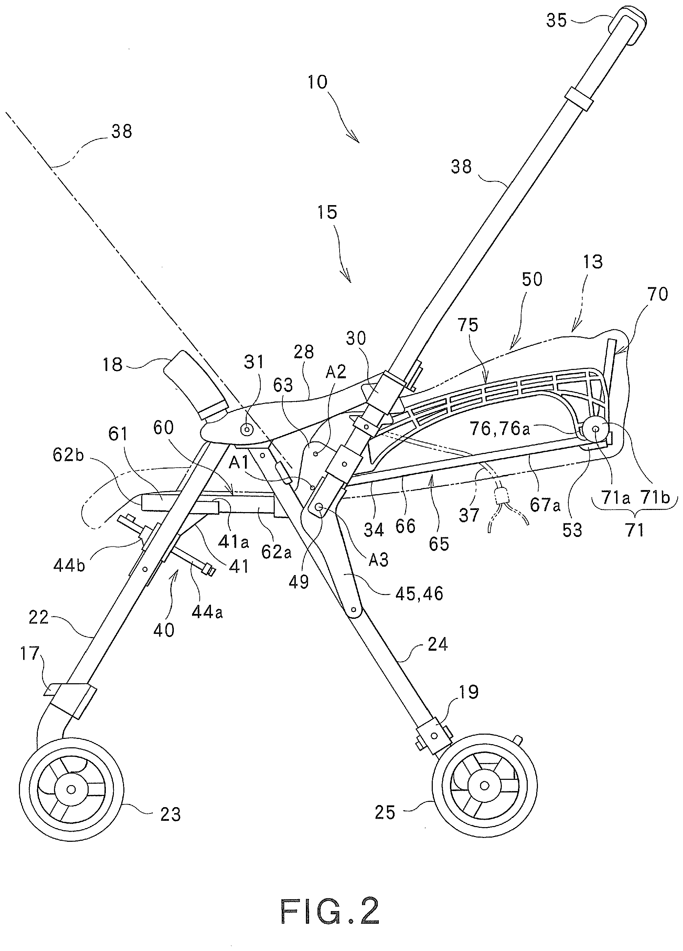

Figs. 1 to 3 show an overall structure of a stroller 10 in a first embodiment. The illustrated stroller 10 includes a stroller body 15 having a front leg 22 and a rear leg 24, a seat unit 50 supported by the stroller body 15, and a seat body 13 mounted on the seat unit 50. A known seat body having a cushion property can be used as the seat body 13. The seat body 13 is preferably removable from the seat unit 50. A baby is seated on or laid on the seat body 13. Among the drawings showing the first embodiment, the seat body 13 is shown only in Fig. 2 by the two-dot chain lines for the convenience of understanding.

In the first embodiment, the stroller body 15 includes a body frame 16 having the front leg 22 and the rear leg 24, and a push handle 38 swingably joined to the body frame 16. In this stroller 10, the handle 38 is swingable with respect to the body frame 16. The handle 38 can be fixed on a backside pushing position (rearward position) shown by the solid line in Figs. 1 and 2, and on a face-to-face pushing position (forward position) shown by the two-dot chain lines in Fig. 2. As a structure for making swingable the handle 38 with respect to the body frame 16, a known structure, e.g., a structure disclosed in JP2008-254688A can be employed.

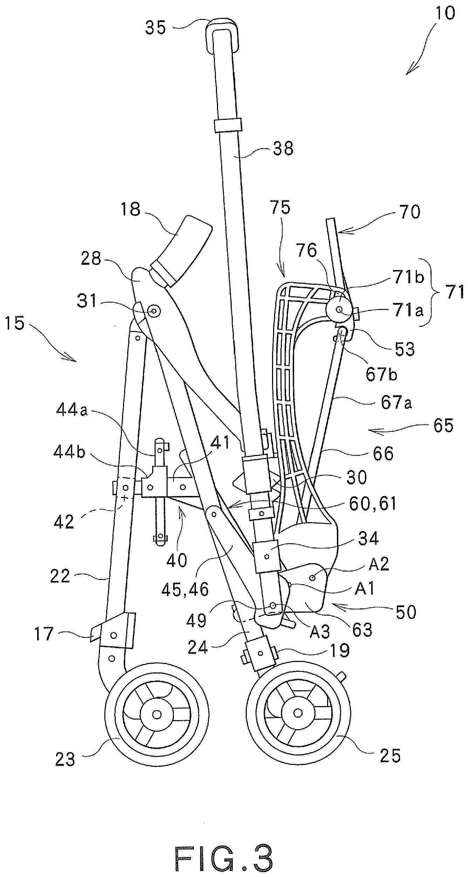

In addition, as shown in Fig. 3, the stroller 10 in this embodiment can be folded in such a manner that the front leg 22, the rear leg 24 and the handle 38 are close to each other. In order that the stroller 10 can be folded, many constituent elements of the stroller body 15 are pivotably joined to one another. Since the seat body 13 is formed of a flexible fabric member or the like, the seat body 13 is deformable in conjunction with the folding operation of the stroller 10.

In this specification, the terms "front", "rear", "up" and "down" with respect to the stroller 10, the stroller body 15 and the seat unit 50 mean, unless otherwise specified, "front", "rear", "up" and "down" with respect to a baby in the unfolded stroller 10. Thus, a "back and forth direction" corresponds to a direction connecting a lower left part and an upper right part in a plane of Fig. 1. In addition, unless otherwise specified, the "front" is a side to which the baby in the stroller faces, and is an upper right side in the plane of Fig. 1. On the other hand, an "up and down direction" is a direction perpendicular to the back and forth direction, and is a direction perpendicular to a surface (ground surface) on which the stroller 10 rests. In addition, a "lateral direction" and a "width direction" are directions perpendicular to both the "back and forth direction" and the "up and down direction". Further, the terms "right" and "left" means "right" and "left" in the lateral direction or the width direction with respect to a baby in the stroller 10, respectively.

The seat unit 50 and the stroller body 15 in the first embodiment will be sequentially described herebelow with respect to Figs. 1 to 5. As can be understood from Figs. 1 to 5, the stroller 10 has substantially a symmetrical structure as a whole, with respect to a lateral center plane extending along the back and forth direction.

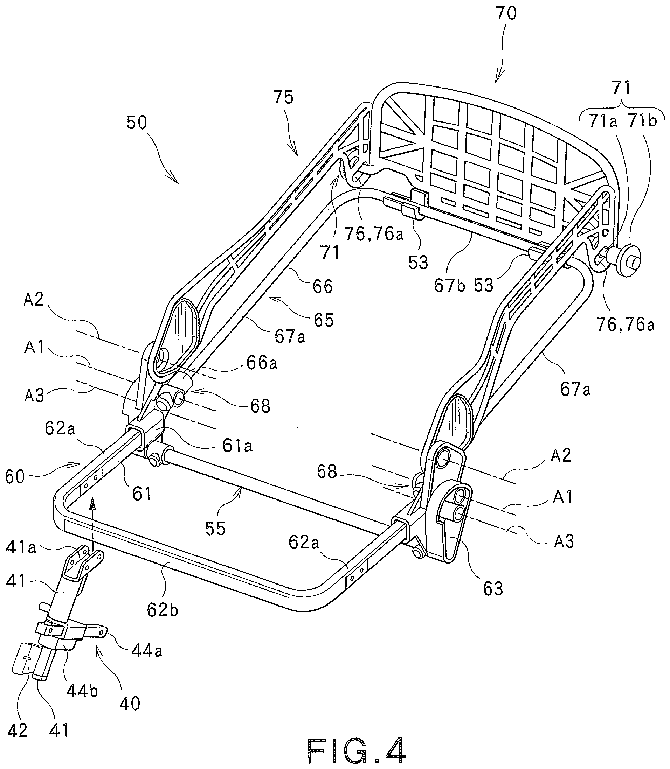

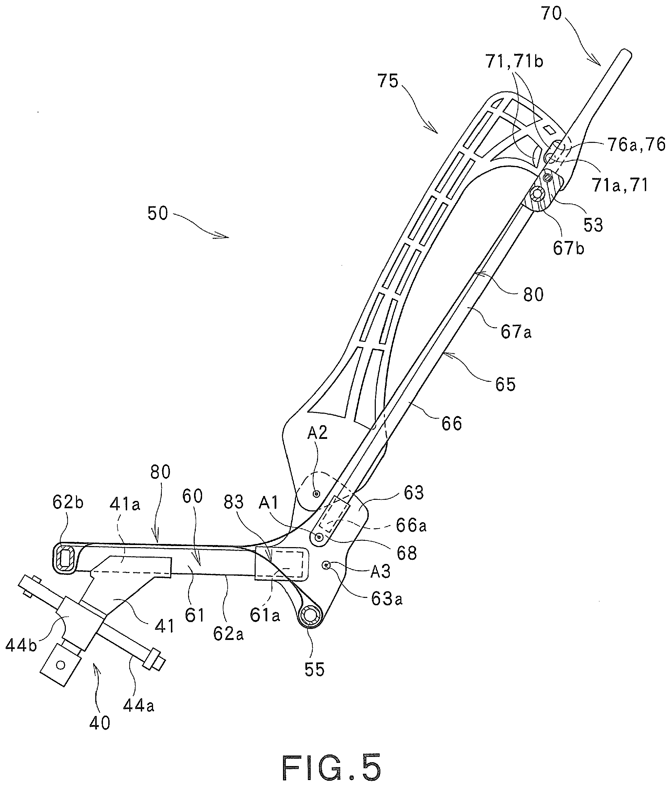

As well shown in Figs. 4 and 5, the seat unit 50 includes a seat part frame element 60, and a back part frame element 65 joined to the seat part frame element 60. The seat part frame element 60 is configured to be positioned below buttocks of a baby carried in the stroller 10, and the back part frame element 65 is configured to be positioned behind a back of the baby carried in the stroller 10. The back part frame element 65 is swingable (reclinable) with respect to the seat part frame element 60. Thus, a reclining motion of the stroller 10 is enabled.

As shown in Fig. 4, the seat part frame element 60 is formed to have a U-shape (more strictly, a substantially square U-shaped profile) as a whole. The back part frame element 65 is also formed to have a U-shape (more strictly, a substantially square U-shaped profile) as a whole. As shown in Fig. 4, corresponding end portions of the U-shaped seat part frame element 60 and the U-shaped back part frame 65 are pivotably joined to each other, such that respective opened parts face to each other. Namely, in the first embodiment, the back part frame element 65 is directly joined to the seat part frame element 60 and is swingable with respect to the seat part frame element 60. However, not limited to this example, the back part frame element 65 may be indirectly joined to the seat part frame element 60 through another member.

In this embodiment, the seat part frame element 60 includes a seat part frame member 61 formed to have a U-shape, and support base members 63 respectively mounted on the end portions 61a of the U-shaped seat part frame member 61. The seat part frame member 61 includes a pair of side frame parts 62a and a connection frame part 62b extending between the pair of side frame parts 62a. The pair of side frame parts 62a have symmetric structures and extend in substantially the back and forth direction. The connection frame part 62b extends to connect front end portions of the pair of side frame parts 62a. The seat part frame member 61 may be an integral component (unit) that is formed by bending a single member (e.g., a metal pipe made of aluminum). On the other hand, the support base member 63 fixed on the end portion 61a of the seat part frame member 61 may be formed by using a resin, for example, as a component (unit) extending in a plane perpendicular to the width direction.

The back part frame element 65 includes a back part frame member 66 formed to have a U-shape, and end members (cap members) 68 respectively mounted on end portions 66a of the U-shaped back part frame member 66. The back part frame member 66 includes a pair of side frame parts 67a and a connection frame part 67b extending between the pair of side frame parts 67b. The pair of side frame parts 67a have symmetric structures and extend in a plane in substantially the back and forth direction. The connection frame part 67b extends to connect rear end portions of the pair of side frame parts 67a. The back part frame member 66 may be an integral component (unit) that is formed by bending a single member (e.g., a metal pipe made of aluminum). On the other hand, the end member 68 fixed on the end portion 66a of the back part frame member 66 is formed as a cap-like member covering the end portion 66a of the back part frame member 66.

As shown in Figs. 4 and 5, the end member 68 of the back part frame element 65 is pivotably joined to the support base member 63 of the seat part frame element 60, by using a shaft member. Thus, as described above, the back part frame element 65 is directly joined to the seat part frame element 60 and is swingable with respect to the seat part frame element 60.

As well shown in Fig. 1, a fabric member 80 for supporting the seat body 13 from below is held tensely in a part surrounded by the seat part frame element 60 and the back part frame element 65. End portions of the fabric member 80 are attached to the connection frame part 62b and the pair of side frame parts 62a of the seat part frame member 61 constituting the seat part frame element 60, and the connection frame part 67b and the pair of side frame parts 67a of the back part frame member 66 constituting the back part frame element 65. As a result, the fabric member 80 is maintained tensely or stretched in the back and forth direction and in the width direction. Since the fabric member 80 supported by the seat part frame element 60 and the back part frame element 65 has a certain degree of rigidity, it is not necessary to manufacture, as plate-like members, the seat part frame element 60 and the back part frame element 65 for supporting the seat body 13, and it is not necessary to equip the seat body 13 with a plate-like member. Thus, the stroller 10 can have a reduced weight and can also provide a comfortable ride quality.

In addition, preferably, a connection frame element 55 is disposed between the both end portions of the seat part frame element 60 or between the both end portions of the back part frame element 65, and a stretching member 83 extends between the fabric member 80 and the joint frame element 55. In the illustrated first embodiment, the joint frame element 55 is formed of, for example, a metal pipe made of aluminum. Both ends of the connection frame element 55 are fixed on the support base members 63 of the seat part frame element 60.

In the example shown in Fig. 5, one end of the stretching member 83 is attached to the connection frame element 55, and the other end thereof is stitched onto the fabric member 80. As well shown in Fig. 5, in the side view of the stroller 10, an attachment position of the connection frame element 55 with respect to the support base member 63 is located below an attachment position of the back part frame element 65 with respect to the seat part frame element 60, i.e., a pivot axis line (swing axis line) A1 of the back part frame element 65 with respect to the seat part frame element 60. As a result, the stretching member 83 can pull downward the fabric member 80 supported by the seat part frame element 60 and the back part frame element 65. Due to the stretching member 83, the fabric member 80 can be maintained in a more stably tensed condition, whereby the seat body 13 can be more stably supported on the fabric member 80.

As shown in Figs. 1 to 5, the seat unit 50 includes an upper frame element 70 that is joined to the back part frame element 65 and is swingable with respect to the back part frame element 65, and a side frame element 75 respectively joined to the upper frame element 70 and the seat part frame element 60. The side frame element 75 is swingable with respect to the upper frame element 70 and the seat part frame element 60.

In the first embodiment, the upper frame element 70 is indirectly joined to the back part frame element 65 through two joint tools 53 that are spaced apart from each other in the width direction. The joint tool 53 is fixed to the connection frame part 67b of the back part frame member 66 constituting the back part frame element 65. Lower end portions of the upper frame element 70 are swingably mounted onto the joint tools 53. On the other hand, in the first embodiment, the pair of side frame elements 75 are provided on both lateral sides of the back part frame element 65. A lower end portion of each side frame element 75 is pivotably joined to the corresponding support base member 63. In addition, an upper end portion of each side frame element 75 is equipped with a joint engagement part (joint engagement means) 76 that is engageable with a joint engagement portion (joint engagement means) 71 of the upper frame element 70. Owing to the engagement between the joint engagement parts 71 and 76, each side frame element 75 is joined to the upper frame element 70 in a relatively swingable manner. That is to say, in the first embodiment, each side frame element 75 is directly joined respectively to the upper frame element 70 and the back part frame element 60 without any member.

However, not limited to the illustrated example, the upper frame element 70 may be directly joined to the back part frame element 65 without any member, and the side frame element 75 may be directly joined to at least one of the upper frame element 70 and the seat part frame element 60 through another member.

As shown in Fig. 5, for example, the joint engagement part 76 of the side frame element 75 is formed as an elongate guide hole 76a. On the other hand, the joint engagement part 71 of the upper frame element 70 includes a joint engagement projection 71a passing through the guide hole 76a, and a stop member 71b disposed on a part of the joint engagement projection 71a passing through the guide hole 76a. The joint engagement projection 71a has such a thickness that the joint engagement projection 71 can be moved in a longitudinal direction of the elongate guide hole 76a. The stop member 71 is formed to have such a size that the stop member 71 cannot come into the guide hole 76a.

Preferably, the side frame element 75 functions as a link so as to swing the upper frame element 70 with respect to the back part frame element 65 in conjunction with the swinging movement of the back part frame element 65 with respect to the seat part frame element 60. In the stroller 10 according to the first embodiment, as shown in Figs. 2 and 4, when the back part frame element 65 is reclined, the upper frame element 70 is raised with respect to the back part frame element 65. Thus, a baby lying on the seat unit 50 can be protected by the pair of side frame elements 75 from the lateral sides, and by the upper frame element 70 from behind.

On the other hand, as shown in Figs. 1 and 5, when the back part frame 65 is raised, the upper frame element 70 extends in substantially parallel with the back part frame element 65. Thus, a baby seated on the seat unit 50 can be protected by the pair of side frame elements 75 from the lateral sides, and the upper frame element 70 can function as a headrest. In addition, as shown in Fig. 3, when the stroller 10 is folded and the back part frame element 65 is raised, the upper frame member 70 extends in substantially parallel with the back part frame element 65, whereby it can be avoided that the upper frame member 70 projects from the stroller 10. Thus, the stroller 10 can have a reduced folded size.

In the stroller 10 according to the present invention, the seat unit 50 is pivotably joined at least at one position thereof to the stroller body 15. In this stroller 10, the seat part frame element 60 of the seat unit 50 is pivotably joined to the stroller body 15. To be more specific, as shown in Fig. 5 the support base member 63 of the seat part frame element 60 has a hole 63a through which a shaft member 49 passes. The shaft member 49 is used for pivotably joining the seat unit 50 to the stroller body 15. As shown in Fig. 5, in the side view of the stroller 10, the hole 63a is located above an attachment position of the connection frame element 55, and is located below a pivotal joint position of the back part frame element 65 and a pivotal joint position of the side frame element 75. Namely, as shown in Fig. 5, a pivot axis line A3 about which the seat unit 50 and the stroller body 15 are pivotably moved is located at a position displaced from a swing axis line A2 of the side frame element 75 with respect to the seat part frame element 60, and the swing axis line A1 of the back part frame element 65 with respect to the seat part frame element 60.

Next, the stroller body 15 supporting the aforementioned seat unit 50 is described in detail with reference mainly to Figs. 1 to 3.

As shown in Figs. 1 to 3, the stroller body 15 includes: a body frame 16 having the right and left front legs 22 and the right and left rear legs 24; wheels (front wheels) 23 rotatably disposed on lower ends of the respective front legs 22; wheels (rear wheels) 25 rotatably disposed on lower ends of the respective rear legs 24; and the handle 38 that is swingable with respect to the body frame 16 between the face-to-face pushing portion and the backside pushing position. The body frame 16 includes: right and left armrests 28 to which the corresponding front leg 22 and the corresponding rear leg 24 are pivotably joined; right and left link elements 26 pivotably joined to rear end portions of the corresponding armrests 28; right and left front support elements 40 mounted on the corresponding front legs 22; and rear support elements 45 mounted on the corresponding rear legs 24.

Upper end portions of the front legs 22 and upper end portions of the rear legs 24 are pivotably joined to the respective armrests 28. Each link element 26 is joined to the rear support element 45 and is swingable with respect to the rear support element 45. Particularly in the illustrated example, the link element 26 is pivotably joined to the rear support element 45. Namely, the link element 26 is directly joined to the rear support element 45 so as to be swingable .

In the stroller 10 according to the first embodiment, the front support element 40 includes a width-direction extension 42 fixed on a middle portion of the front leg 22, and a front support part 41 joined to the width-direction extension 42. The front support part 41 is pivotably joined to the width-direction extension 42 and the front leg 22 by using a shaft member passing through the width-direction extension 42 and the front leg 22. Thus, the front support part 41 is swingable with respect to the front leg 22.

The front support part 41 of the front support element 40 is fixed to the seat unit 50. In the stroller 10 in the first embodiment, the front support part 41 is fixed to the seat part frame element 60 of the seat unit 50. In more detail, each front support part 41 is fixed to the corresponding side frame part 62a of the seat part frame member 61 constituting the seat part frame element 60. As shown in Fig. 4, the front support part 41 has, in an upper end portion thereof, a recess 41a configured to receive the seat part frame member 61 of the seat part frame element 60 from above. The seat part frame member 61 is fixed to the front support part 41 by using a pin, for example, with the seat part frame member 61 being received inside the recess 41a. Thus, the seat part frame element 60 is supported from below by the front support element 40.

A lower end portion of the front support part 41 is pivotably joined to the width-direction extension 42. The width-direction extension 42 extends from the corresponding front leg 22 to the inside of the stroller 10 along the width direction thereof. The front support part 41 is spaced apart from the front leg 22 through the width-direction extension 42 in the width direction of the stroller 10. Since a sufficient gap can be obtained between the front support part 41 and the front leg 22 due to the width-direction extension 42, it can be efficiently prevented that a garment, the seat body 13 and so on are caught between the front support part 41 and the front leg 22, when the front support part 41 is swung with respect to the front leg 22. In particular, in the illustrated first embodiment, since the upper end portion of the front support part 41 is fixed on the side frame part 62a of the seat part frame element 60, it can also be efficiently prevented that a garment, the seat body 13 and so on are caught between the seat unit 50 and the front leg 22, when the front support part 41 is swung with respect to the front leg 22.

In the stroller 10 according to the first embodiment, each front support part 41 of the front support element 40 is composed of a stay holder 44b and a seat receiving stay 44a. The seat receiving stay 44a is slidably supported with respect to the stay holder 44b, such that the seat receiving stay 44a is movable in a longitudinal direction thereof. When the seat receiving stay 44a extends forward, a front part of the seat body 13 can be supported from below. For example, when the back part frame element 65 of the seat unit 50 is reclined and a baby lies on the seat body 13, legs of the baby can be supported by raising the front part of the seat body 13 by means of the seat receiving stay 44a.

The rear support element 45 includes a rear support part 46 pivotably joined to the seat unit 50. In the first embodiment, the rear support part 46 is pivotably joined to the seat part frame element 60 of the seat unit 50. In more detail, each rear support part 46 is pivotably joined to the support base member 63 constituting the seat part frame element 60 by using the shaft member 49. Thus, the seat part frame element 60 is supported from below by the rear support element 45.

The rear support part 46 is also pivotably joined to the link element 26 by using the shaft member 49. Thus, the link element 26 and the seat unit 50 are pivotably joined to each other by using the shaft member 49. That is to say, in the side view of the stroller 10, the rotation axis line A3 of the rear support part 46 and the seat unit 50 corresponds to the rotation axis line A3 of the rear support part 46 and the link element 26, and a rotation axis line of the link element 26 and the seat unit 50. On the other hand, as well shown in Fig. 5, in the side view of the stroller 10, the axis line A3 about which the seat unit 50 and the rear support part 45 are pivotably moved is located at a position displaced from both the swing axis line A1 of the back part frame element 65 with respect to the seat part frame element 60, and the swing axis line A2 of the side frame element 75 with respect to the seat part frame element 60.

As well shown in Fig. 2, the shaft member 49 passes through the upper end portion of the rear support part 46. On the other hand, the the rear support part 46 is joined to the rear leg 24 at the lower end portion thereof. Particularly in the first embodiment, the rear support part 46 is pivotably joined to a middle portion of the rear leg 24. Namely, the rear support part 46 is directly joined to the rear leg 24 so as to be swingable with respect to the rear leg 24. In addition, in the illustrated example, the rear support element 45 is composed only of the rear support part 46.

As shown in Fig. 1, the body frame 16 includes, as constituent elements extending in the width direction, a footrest 17 extending between the pair of front legs 22, a rear connection member 19 extending between the pair of rear legs 24, and a guard member 18 extending between the pair of armrests 28.

The U-shaped handle 38 is swingably joined to the body frame 16 as structured above. Both ends of the U-shaped handle 38 are rotatably (swingably) joined to the corresponding rear support elements 45. To be more specific, the handle 38 is pivotably joined to the rear support parts 46 of the rear support elements 45, the link elements 26 and the seat unit 50 by using the shaft members 49. In the illustrated stroller 10 according to the first embodiment, the shaft member 49 passes through the constituent elements, i.e., the handle 38, the rear support part 46 of the rear support element 45, the link element 26, and the support base member 63 of the seat part frame element 60 of the seat unit 50 in this order from the outside to the inside along the width direction.

The handle 38 has a handle fixing member 30 that is slidable with respect to the handle 38 in a longitudinal direction of the handle 38. The handle fixing member 30 is engageable with an engagement pin 31 disposed on the body frame 16. When the engagement pin 31 and the handle fixing member 30 are engaged with each other, the handle 38 is locked on the face-to-face pushing position or on the backside pushing position.

The stroller 10 having the above-described structure can be folded from an unfolded state shown in Figs. 1 and 2 to a folded state shown in Fig. 3. During the folding operation, the respective constituent elements constituting the stroller 10 are rotated (pivoted, swung) one another about the axis line extending in the width direction.

Specifically, by once pulling upward behind the handle 38, which is located on the backside pushing position and then pushing it downward, the rear support part 46 of the rear support element 45 is rotated clockwise in Fig. 2 with respect to the rear leg 24. In conjunction with this operation, the armrest 28 and the seat part frame element 60 of the seat unit 50 are rotated clockwise in Fig. 2 with respect to the link element 26. By means of this operation, in the side view of the stroller 10, the handle 38 and the front leg 22 come close to each other so as to be positioned in substantially parallel with each other, and the located position of the handle 38 is lowered. In this manner, the stroller 10 can be folded, and dimensions of the stroller 10 can be reduced along the back and forth direction and the up and down direction. On the other hand, when the stroller 10 in the folded state is unfolded, the aforementioned folding operation is reversely performed.

Namely, in this stroller 10, the rear support element 45 also functions as a link, during the folding operation of the stroller 10 and during the unfolding operation of the stroller 10. Similarly, a part of the seat unit 50 (specifically, a part of the seat unit 50 from an area pivotably joined to the rear support element 45 up to an area fixed to the front support element 40) and the front support element 40 function as one link, during the folding operation of the stroller 10 and during the unfolding operation of the stroller 10.

As shown in Fig. 1, the link element 26 is equipped with a locking member 33 that is engageable with the rear support part 46. The locking member 33 is slidable with respect to the link element 26 along the longitudinal direction of the link element 26. Since the locking member 33 is urged toward the rear support part 46 so as to be engaged with the rear support part 46, the locking member 33 restricts a relative swinging movement of the link element 26 and the rear support part 46. On the other hand, the handle 38 is equipped with a lock operation member 34 that is engageable with the locking member 33, and a remote operation mechanism 35 that remotely operates the lock operation member 34. By using the remote operation mechanism 35, the locking member 33 is operated through the lock operation member 34, so that the locking member 33 and the rear support part 46 can be disengaged from each other. That is to say, by operating the remote operation mechanism 35, the folding operation of the stroller 10 in the unfolded state is enabled.

According to the stroller 10 in the first embodiment, the seat unit 50 is joined to the stroller body 15 through the front support element 40 of the stroller body 15 and the rear support element 45 thereof. Thus, the seat unit 50 can be designed, structured and manufactured independently of and separately from the stroller body 15.

In addition, according to the stroller 10 in the first embodiment, in the side view of the stroller 10, the axis A3 about which the seat unit 50 and the stroller body 15 are pivotably moved is located at a position displaced from the swing axis line A1 of the back part frame element 65 with respect o the seat part frame element 60. Further, in the side view of the stroller 10, the axis line A3 about which the seat unit 50 and the stroller body 15 are pivotably moved is located at a position displaced from the swing axis line A2 of the side frame element 75 with respect to the seat part frame element 60. Thus, also in this regard, the seat unit 50 can be designed, structured and manufactured independently of and separately from the stroller body 15.

When the seat unit 50 can be designed, structured and manufactured independently of and separated from the stroller body 15, a degree of freedom in design of the stroller 10 can be greatly improved. For example, structures of the front support element 40 and the rear support element 45 can be adjusted, without significantly changing the link structure of the foldable stroller 10. Thus, for example, a height position of the seat part frame element 66, in other words, a height of a seat surface of the stroller 10 can be selected from a wide range with a high degree of freedom.

In addition, a position of the swing axis line A1 of the back part frame element 65 with respect to the seat part frame element 60 can be suitably designed, without being significantly limited by the structure for enabling folding of the stroller 10. Thus, the stroller 10 can be structured such that a center of gravity of a baby carried in the stroller 10 is located at a suitable position. Moreover, the shape (form, posture) of the seat body 13 to be mounted on the seat unit 50 can be made fair during the folding operation, whereby the folding operation of the stroller 10 can be facilitated or smoothened. Specifically, a position of the swing axis line A1 of the back part frame element 65 with respect to the seat part frame element 60 is suitably designed such that an angle between the back part frame element 65 and the seat part frame element 60 in the side view of the folded stroller 10 is not so small. In this case, it can be avoided that, when the stroller 10 is folded, the seat part frame element 60 and the back part frame element 65 come so close to each other that a space for receiving the seat body 13 cannot be defined.

Further, in the manufacture of the stroller 10, a part or whole of the seat unit 50 can be pre-fabricated together with a part of the stroller body 15 according to need, and then the fabricated seat unit 50 can be mounted on the stroller body 15. According to this manufacturing method, the manufacture of the stroller 10 can be facilitated in a more stable and efficient manner, as compared with a case in which respective constituent elements are sequentially assembled so as to manufacture a stroller. As in the first embodiment where the seat unit 50 includes, not only the seat part frame element 60 and the back part frame element 65, but also the upper frame element 70 and the side frame element 75 functioning as a link that controls reclining of the upper frame element 70, since the seat unit 50 having a complicated structure can be assembled beforehand, the manufacture of the stroller 10 can be greatly facilitated. In particular, as in the first embodiment where the seat unit 50 includes the fabric member 80 disposed tensely on the seat part frame element 60 and the back part frame element 65, as well as the connection frame element 55 extending in the width direction and the stretching member 83 for stretching the fabric member 80, since the seat unit 50 having a complicated structure can be assembled beforehand, the manufacture of the stroller 10 can be greatly facilitated. In addition, the fabric member 80 can be disposed on the seat part frame element 60 and the back part frame element 65 beforehand. Further, since the stretching member 83 can be assembled in the seat unit 50 beforehand, a stretching degree of the fabric member 80 can be precisely adjusted. However, the present invention does not intend to limit the manufacturing method of the stroller 10.

Furthermore, in the first embodiment, the front support part 41 has, in the one end portion thereof, the recess 41a configured to receive the seat part frame element 60 from above, and the front support part 41 supports the seat part frame element 60 from below. According to such a stroller 10, a mounting operation of the seat unit 50 to the stroller body 15 through the front support element 40 can be simplified. When a part or whole of the seat unit 50 is pre-fabricated and then the stroller body 15 is manufactured, the front support element 40 may be firstly mounted either on the seat unit 50 or another constituent element of the stroller body 15. Thus, a degree of freedom in the manufacturing method of the stroller 10 can be improved, whereby a production efficiency of the stroller 10 can be further enhanced.

Next, the stroller according to a second embodiment will be described with reference to Figs. 6 to 10. In Figs. 6 to 10, the same reference numbers used for the stroller 10 shown in Figs. 1 to 5 are used for the corresponding constituent elements, parts and portions. In addition, in the below description about the second embodiment, difference from the first embodiment is mainly described, and description of a part that can be structured similarly to the first embodiment is omitted.

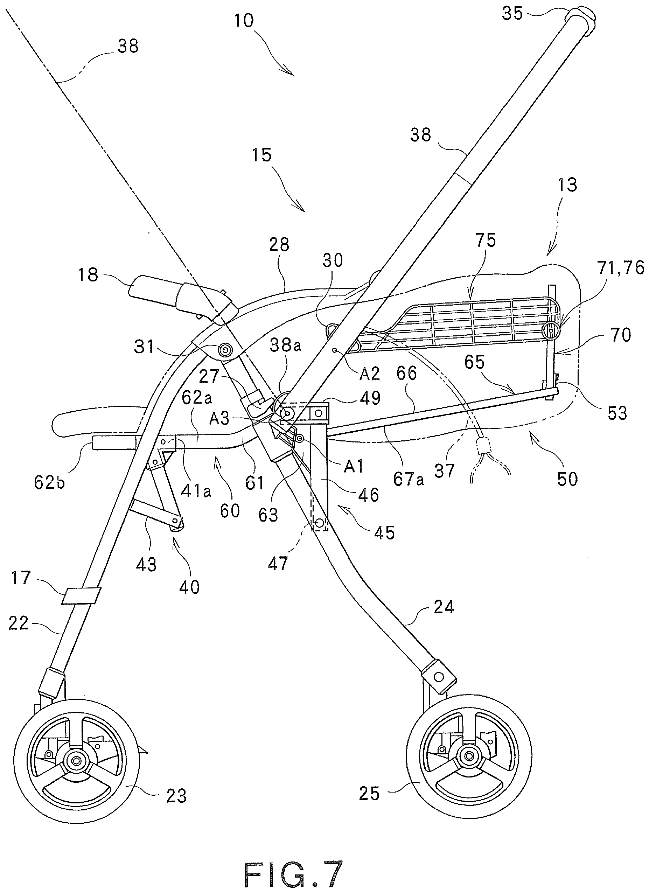

Figs. 6 to 8 show an overall structure of a stroller 10 in the second embodiment. Similarly to the stroller in the first embodiment, the stroller 10 includes a stroller body 15 having a front leg 22 and a rear leg 24, a seat unit 50 supported by the stroller body 15, and a seat body 13 mounted on the seat unit 50. The stroller body 15 includes: a body frame 16 having the front legs 22 and the rear legs 24; and a handle 38 that is swingably joined with respect to the body frame 16 between the face-to-face pushing portion (position indicated by the two dot chain line in Fig. 7) and the backside pushing position (position indicated by the solid line in Fig. 7). Similarly to the stroller in the first embodiment, the stroller 10 in the second embodiment has substantially a symmetrical structure as a whole, with respect to a lateral center plane extending along the back and forth direction.

Similarly to the first stroller in the first embodiment, the seat unit 50 includes a seat part frame element 60, a back part frame element 65 that is joined to the seat part frame element 60 and is swingable with respect to the seat part frame element 60, an upper frame element 70 and a side frame element 75. The seat part frame element 60 includes a U-shaped seat part frame member 61 having a pair of side frame parts 62a and a connection frame part 62b, and right and left support base members 63 disposed on end portions 61a of the seat part frame member 61. The back part frame element 65 includes a U-shaped back part frame member 66 having a pair of side frame pats 67a and a connection frame part 67b, and right and left end members (cap members) 68 disposed on end portions 66a of the back part frame member 66. Each end member 68 is pivotably joined to the corresponding support base member 63.

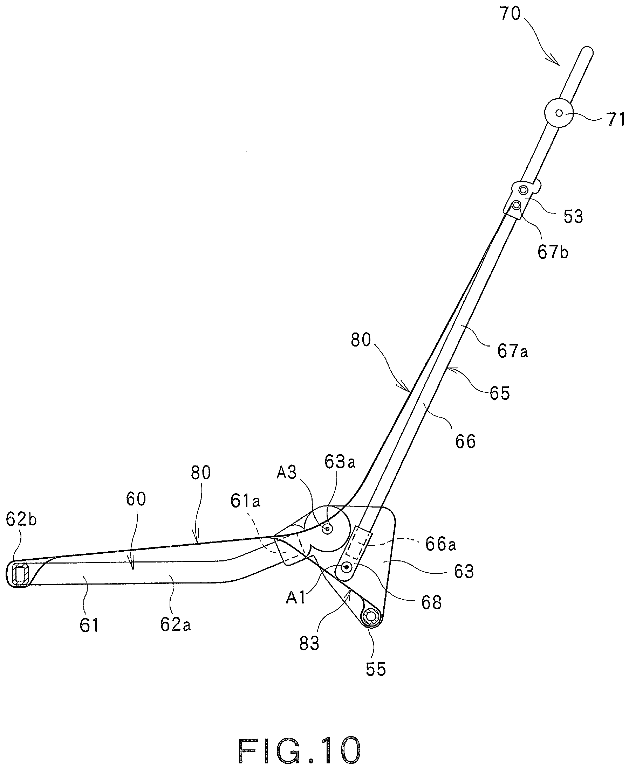

A lower end portion of the upper frame element 70 is joined to the connection frame part 67 of the back part frame member 66 through a joint tool 53, and the upper frame element 70 is swingable with respect to the back part frame element 65. The side frame elements 75 are respectively joined to both side portions of the upper frame element 70. Each side frame element 75 has a joint engagement portion (joint engagement means) 76. By engaging the joint engagement portion 76 of the side frame element 75 with a joint engagement portion (joint engagement means) 71 of the upper frame element 70, the side frame element 75 is joined to the upper frame element 70 and is swingable with respect to the upper frame element 70. As shown in Fig. 10, an axis line A3 about which the seat unit 50 and the stroller body 15 are pivotably moved is located at a position displaced from a swing axis line A1 of the back part frame element 65 with respect to the seat part frame element 60.

As shown in Fig. 1 to 3, an opposed end portion of the side frame element 75 is pivotably joined, not to the seat part frame element 60, but to the stroller body 15. More strictly, the side frame element 75 is pivotably joined to the link element 26 of the stroller body 15. In addition, as shown in Fig. 10, in the side view of the stroller 10, a hole 63a for receiving a shaft member 49 is located above an attachment position of the connection frame element 55 and a pivotal joint position of the back part frame element 65. The stroller 10 according to the second embodiment differs from the stroller according to the first embodiment in this point. However, also in the second embodiment, when the back part frame element 65 is swung with respect to the seat part frame element 60, the side frame element 75 functions as a link so that the upper frame element 70 can be swung with respect to the back part frame element 65.

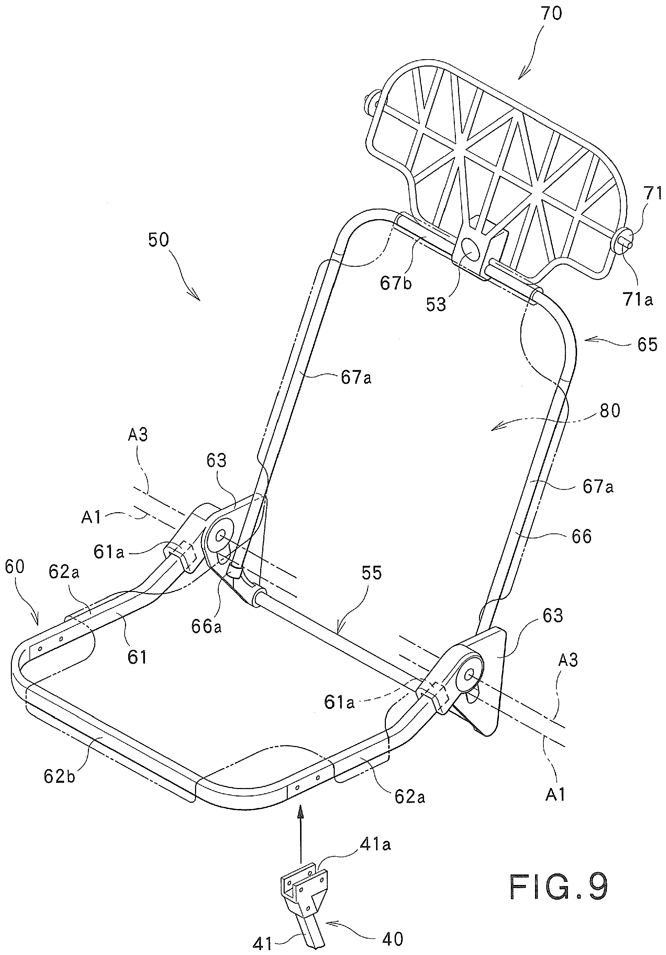

As shown by the two-dot chain lines in Fig. 9, a fabric member 80 is disposed tensely on the seat part frame element 60 and the back part frame element 65. In addition, the connection frame element 55 extends between the pair of support base members 63, and a stretching member 83 is tensely disposed between the fabric member 80 and the connection frame element 55, as shown in Fig. 10.

Similarly to the stroller according to the first embodiment, the body frame 16 of the stroller body 15 includes the front legs 22, the rear legs 24, the armrests 28, the link elements 26, a guard member 18, a footrest 17, a rear connection member 19, front support elements 40 and rear support elements 45.

In the second embodiment, the front support element 40 includes an attachment 43 attached to the front leg 22, a front support part 41 having, in an upper end portion thereof, a recess 41a configured to receive the seat unit 50, and a width-direction extension 42 extending between the front support part 41 and the attachment 43. The attachment 43 is fixed to the corresponding front leg 22 by welding, for example. The attachment 43 extends in a plane perpendicular to the width direction of the stroller 10. Namely, the attachment 43 extends substantially perpendicular to a direction in which the width-direction extension 42 extends.

In addition, in the second embodiment, the rear support part 46 of the rear support element 45 is formed as an L-shaped member composed of a linear member, in particular, a rectilinear member made of, in particular, a metal, and a member fixed on a distal end of the rectilinear metal member. The L-shaped rear support part 46 is pivotably joined, at one end portion thereof, to the handle 38, the link element 26 and the seat unit 50 coaxially. In addition, in the second embodiment, the rear support element 45 further includes a width-direction extension 47 disposed on the other end portion of the L-shaped rear support part 46. The width-direction extension 47 extends from the corresponding rear leg 24 to the inside of the stroller 10 along the width direction thereof. In the second embodiment, the rear support part 46 is joined to the rear leg 24 through the width-direction extension 47.

Namely, the rear support part 46 is spaced apart from the rear leg 24 through the width-direction extension 47 in the width direction of the stroller 10. Since a sufficient gap can be obtained between the rear support part 46 and the rear leg 24 due to the width-direction extension 47, it can be efficiently prevented that a garment, the seat body 13 and so on are caught between the rear support part 46 and the rear leg 24, when the rear support part 46 is swung with respect to the rear leg 24.

The U-shaped handle 38 is pivotably joined to the link element 26, the rear support part 46 of the rear support element 45 and the seat unit 50, by using the shaft member 49. In the illustrated stroller 10 according to the second embodiment, the shaft member 49 passes through the constituent elements, i.e., the handle 38, the link element 26, the rear support part 46 of the rear support element 45, and the support base member 63 of the seat part frame element 60 of the seat unit 50 in this order from the outside to the inside along the width direction.

In the stroller 10 according to the second embodiment, wheel holding mechanisms 22a and 24a attached to the front leg 22 and the rear leg 24 are formed as casters, so as not only to hold wheels 23 and 25 rotatably about a rotation axis line La, but also to turn the wheel 25 and a shaft member (axle) holding the wheel 25 about a turn axis line Lb intersecting the rotation axis line La. In addition, the respective wheel holding mechanisms 22a and 24a incorporate locking mechanisms (not shown) for restricting turning movements of the wheels 23 and 25 about the turn axis lines Lb.

As disclosed in JP2008-254688A and JP2010-234988A, for example, restriction and derrestriction of the turning movements of the wheels 23 and 25 by the locking mechanisms may be carried out in conjunction with a position of the handle 38. Specifically, the wheel holding mechanism 22a or 24a, which is attached to the forward leg of the front leg 22 or the rear leg 24 in the traveling direction, enables turning of the wheel 23 or 25 about the turn axis line Lb, and the wheel holding mechanism 22a or 24a, which is attached to the rearward leg of the front leg 22 or the rear leg 24 in the traveling direction restricts turning of the wheel 23 or 25 about the turn axis line Lb. According to this embodiment, the stroller 10 can be smoothly turned in either case when the stroller 10 is steered by an operator (caregiver) with gripping the handle 38 from a position backside of a baby, or when the stroller 10 is steered by an operator with gripping the handle 38 from a position on a side of the front legs where the operator faces the baby.

In the illustrated stroller 10 according to the second embodiment, the rear leg 24 is provided with a switching member 27, for example. The switching member 27 is slidable with respect to the rear leg 24, and is urged toward an end portion of the handle 38. A pressing part 38a is disposed on the end portion of the handle 38. The pressing portion 38a has an outer circumference in contact with the switching member 27. The switching member 27 is pressed against the pressing part 38a in conjunction with the swinging movement of the handle 38, so that the switching member 27 is slid along the rear leg 24. The sliding movement of the switching member 27 is transmitted to the locking mechanism of the wheel holding mechanism 22a or 24a, whereby the turning movement of the wheel 23 or 25 is controlled.

According to the aforementioned stroller 10 in the second embodiment, the seat unit 50 is joined to the stroller body 15 through the front support element 40 of the stroller body 15 and the rear support element 45 thereof. Thus, the seat unit 50 can be designed, structured and manufactured independently of and separately from the stroller body 15. In addition, according to the stroller 10 in the second embodiment, in the side view of the stroller 10, the axis line A3 about which the seat unit 50 and the stroller body 15 are pivotably moved is located at a position displaced from the swing axis line A1 of the back part frame element 65 with respect to the seat part frame element 60. Further, in the side view of the stroller 10, the axis line A3 about which the seat unit 50 and the stroller body 15 are pivotably moved is located at a position displaced from the swing axis line A2 of the side frame element 75 with respect to the seat part frame element 60. Thus, also in this regard, the seat unit 50 can be designed, structured and manufactured independently of and separately from the stroller body 15. As a result, also according to the second embodiment, the same effect as that of the first embodiment can be obtained.

The aforementioned embodiment can be variously modified. A modification example is described below.

In the above embodiment, there is described the example in which the connection frame element 55 extends between the pair of support base members 63. However, not limited thereto, the connection frame element 55 may extend between the pair of side frame parts 62a of the seat part frame member 61, may extend between the pair of end members 68 of the back part frame element 65, or may extend between the pair of side frame parts 67a of the back part frame member 66.

In addition, the stroller 10 may be structured such that, after the stroller 10 is folded to have a reduced size in the back and forth direction, the stroller 10 is further folded to have a reduced size in the width direction. Specifically, the members of the stroller body 15 which extend in the width direction, i.e., the handle 38, the guard member 18, the footrest 17 and the rear connection member 19 respectively have hinges (bending points). Thus, these members can be bent about the hinges, after the stroller 10 has been folded to have the reduced size in the back and forth direction.

Further, in the above-described stroller 10, there is described the example in which the handle 38 is swingable between the backside pushing portion (rearward position) and the face-to-face pushing position (forward position). That is to say, in the aforementioned embodiment, the handle 38 is provided separately from the link element 26 so that the handle 38 is swingable with respect to the body frame 16. However, the stroller 10 may be structured in such a manner that the handle 38 is fixed on the rearward position so as not to be swingable from the backside pushing position. Specifically, the pair of link elements 26 may be formed by portions corresponding to the lower end portions of the handle 38. In other words, the link element 26 may further extend over a position to which the armrest 28 is joined so as to constitute a part of the handle 38.

Some modification examples have been explained hereabove, and it is possible as a matter of course that these modification examples may be suitably combined to each other.

## Claims

1. A stroller comprising:
a stroller body having a front leg (22), a rear leg (24), a front support element (40) mounted on the front leg (22), and a rear support element (45) mounted on the rear leg (24); and
a seat unit (50) having a seat part frame element (60), and a back part frame element (65) that is joined to the seat part frame element (60) and is swingable with respect to the seat part frame element (60);
wherein:
the front support element (40) includes a front support part (41) that is fixed to the seat unit (50) and is swingable with respect to the front leg (22); and
the rear support element (45) includes a rear support part (46) that is pivotably joined to the seat unit (50) and is swingable with respect to the rear leg (24);
**characterized in that**
the front support element (40) includes a width-direction extension (42) pivotably joined to a lower end portion of the front support part (41) and extending in a width direction of the stroller; and
the front support part (41) is spaced apart from the front leg (22) through the width-direction extension (42) in the width direction of the stroller.

2. The stroller according to claim 1, wherein
in a side view of the stroller, an axis line about which the seat unit (50) and the rear support part (46) are pivotably moved is displaced from a swing axis line of the back part frame element (65) with respect to the seat part frame element (60).

3. The stroller according to claim 1 or 2, wherein
the front support part (41) has, in an upper portion thereof, a recess (41a) configured to receive the seat part frame element (60) from above, and supports the seat part frame element (60) from below.

4. The stroller according to any one of claims 1 to 3, wherein:
the seat unit (50) further includes an upper frame element (70) that is joined to the back part frame element (65) and is swingable with respect to the back part frame element (65), and a side frame element (75) that is joined to the upper frame element (70) and is joined to the seat part frame element (60) or the stroller body, the side frame element (75) being swingable with respect to the upper frame element (70) and with respect to the seat part frame element (60) or the stroller body (15); and
in the side view of the stroller, the axis line about which the seat unit (50) and the rear support part (46) are pivotably moved is displaced from a swing axis line of the side frame element (75) with respect to the seat part frame element (60) or the stroller body (15).

5. The stroller according to any one of claims 1 to 4, wherein:
the rear support element (45) includes a width-direction extension (47) extending in the width direction of the stroller; and
the rear support part (46) is spaced apart from the rear leg (24) through the width-direction extension (47) in the width direction of the stroller.

## Patentansprüche

1. Kinderwagen, umfassend:
einen Kinderwagenkörper mit einem vorderen Bein (22), einem hinteren Bein (24), einem vorderen Stützelement (40), das am vorderen Bein (22) angebracht ist, und einem hinteren Stützelement (45), das am hinteren Bein (24) angebracht ist; und
eine Sitzeinheit (50) mit einem Sitzteilrahmenelement (60) und einem Rückteilrahmenelement (65), das mit dem Sitzteilrahmenelement (60) verbunden ist und bezüglich des Sitzteilrahmenelements (60) verschwenkbar ist;
wobei:
das vordere Stützelement (40) ein vorderes Stützteil (41) aufweist, das an der Sitzeinheit (50) befestigt ist und bezüglich des vorderen Beins (22) verschwenkbar ist; und
das hintere Stützelement (45) ein hinteres Stützteil (46) aufweist, das schwenkbar mit der Sitzeinheit (50) verbunden ist und bezüglich des hinteren Beins (24) verschwenkbar ist;
**dadurch gekennzeichnet, dass**
das vordere Stützelement (40) eine Erweiterung (42) in Breitenrichtung aufweist, die mit einem unteren Endabschnitt des vorderen Stützteils (41) verbunden ist und in einer Breitenrichtung des Kinderwagens verläuft; und
das vordere Stützteil (41) über die Erweiterung (47) in der Breitenrichtung des Kinderwagens zum vorderen Bein (22) beabstandet ist.

2. Kinderwagen nach Anspruch 1, wobei
in einer Seitenansicht des Kinderwagens eine Achsenlinie, um die die Sitzeinheit (50) und das hintere Stützteil (46) schwenkbar bewegt werden, bezüglich des Sitzteilrahmenelements (60) zu einer Schwingachsenlinie des Rückteilrahmenelements (65) versetzt ist.

3. Kinderwagen nach Anspruch 1 oder 2, wobei
das vordere Stützteil (41) in einem oberen Abschnitt eine Aussparung (41a) aufweist, die zum Aufnehmen des Sitzteilrahmenelements (60) von oben konfiguriert ist und das Sitzteilrahmenelement (60) von unten stützt.

4. Kinderwagen nach einem der Ansprüche 1 bis 3, wobei:
die Sitzeinheit (50) ferner ein oberes Rahmenelement (70), das mit dem Rückteilrahmenelement (65) verbunden ist und bezüglich des Rückteilrahmenelements (65) verschwenkbar ist, und ein Seitenrahmenelement (75) aufweist, das mit dem oberen Rahmenelement (70) verbunden ist und mit dem Sitzteilrahmenelement (60) oder dem Kinderwagenkörper verbunden ist, wobei das Seitenrahmenelement (75) bezüglich des oberen Rahmenelements (70) und bezüglich des Sitzteilrahmenelements (60) oder des Kinderwagenkörpers (15) verschwenkbar ist; und
in der Seitenansicht des Kinderwagens die Achsenlinie, um die die Sitzeinheit (50) und das hintere Stützteil (46) schwenkbar bewegt werden, bezüglich des Sitzteilrahmenelements (60) oder des Kinderwagenkörpers (15) zu einer Schwingachsenlinie des Seitenrahmenelements (75) versetzt ist.

5. Kinderwagen nach einem der Ansprüche 1 bis 4, wobei:
das hintere Stützelement (45) eine Erweiterung (47) in Breitenrichtung aufweist, die in der Breitenrichtung des Kinderwagens verläuft; und
das hintere Stützteil (46) über die Erweiterung (47) in der Breitenrichtung des Kinderwagens zum hinteren Bein (24) beabstandet ist.

## Revendications

1. Poussette comprenant :
un corps de poussette ayant une jambe avant (22), une jambe arrière (24), un élément de support avant (40) monté sur la jambe avant (22), et un élément de support arrière (45) monté sur la jambe arrière (24) ; et
une unité de siège (50) ayant un élément de bâti de partie de siège (60) et un élément de bâti de partie de dossier (65) qui est assemblé à l'élément de bâti de partie de siège (60) et peut osciller par rapport à l'élément de bâti de partie de siège (60) ;
dans laquelle :
l'élément de support avant (40) comprend une partie de support avant (41) qui est fixée sur l'unité de siège (50) et peut osciller par rapport à la jambe avant (22) ; et
l'élément de support arrière (45) comprend une partie de support arrière (46) qui est assemblée de manière pivotante à l'unité de siège (50) et peut osciller par rapport à la jambe arrière (24) ;
**caractérisée en ce que** :
l'élément de support avant (40) comprend une extension dans le sens de la largeur (42) assemblée de manière pivotante à une partie d'extrémité inférieure de la partie de support avant (41) et s'étendant dans le sens de la largeur de la poussette ; et
la partie de support avant (41) est espacée de la jambe avant (22) par le biais de l'extension dans le sens de la largeur (42) dans le sens de la largeur de la poussette.

2. Poussette selon la revendication 1, dans laquelle :
sur une vue latérale de la poussette, une ligne axiale autour de laquelle l'unité de siège (50) et la partie de support arrière (46) sont déplacées de manière pivotante, est déplacée par rapport à une ligne axiale d'oscillation de l'élément de bâti de partie de dossier (65) par rapport à l'élément de bâti de partie de siège (60).

3. Poussette selon la revendication 1 ou 2, dans laquelle :
la partie de support avant (41) a, dans sa partie supérieure, un évidement (41a) configuré pour recevoir l'élément de bâti de partie de siège (60) depuis le dessus, et supporte l'élément de bâti de partie de siège (60) de dessous.

4. Poussette selon l'une quelconque des revendications 1 à 3, dans laquelle :
l'unité de siège (50) comprend en outre un élément de bâti supérieur (70) qui est assemblé à l'élément de bâti de partie de dossier (65) et peut osciller par rapport à l'élément de bâti de partie de dossier (65), et un élément de bâti latéral (75) qui est assemblé à l'élément de bâti supérieur (70) et est assemblé à l'élément de bâti de partie de siège (60) ou au corps de poussette, l'élément de bâti latéral (75) pouvant osciller par rapport à l'élément de bâti supérieur (70) et par rapport à l'élément de bâti de partie de siège (60) ou du corps de poussette (15) ; et
sur la vue latérale de la poussette, la ligne axiale autour de laquelle l'unité de siège (50) et la partie de support arrière (46) sont déplacées de manière pivotante, est déplacée par rapport à une ligne axiale d'oscillation de l'élément de bâti latéral (75) par rapport à l'élément de bâti de partie de siège (60) ou au corps de poussette (15).

5. Poussette selon l'une quelconque des revendications 1 à 4, dans laquelle :
l'élément de support arrière (45) comprend une extension dans le sens de la largeur (47) s'étendant dans le sens de la largeur de la poussette ; et
la partie de support arrière (46) est espacée de la jambe arrière (24) par le biais de l'extension dans le sens de la largeur (47) dans le sens de la largeur de la poussette.
